# DEMANDE DE BREVET EUROPEEN

(11) **EP 4 470 910 A1**
(43) Date de publication de la demande: **04.12.2024**
(21) Numéro de dépôt: 24174422.6
(22) Date de dépôt: 07.05.2024
(51) Int. Cl.: B64C 1/26, B64F 5/10

(54) **PROCÉDÉ D'ASSEMBLAGE D'UN CAISSON CENTRAL DE VOILURE D'AÉRONEF COMPORTANT UNE ÉTAPE DE FIXATION DES ÉQUIPEMENTS SUR AU MOINS UN SUPPORT D'ASSEMBLAGE SITUÉ HORS DU CAISSON CENTRAL DE VOILURE**

(30) Priorité: 31.05.2023 FR 2305383
(71) Demandeur: AIRBUS OPERATIONS (S.A.S.), 31060 Toulouse (FR)
(72) Inventeur: RIGAUD, Christophe, 31060 TOULOUSE (FR); BEAU, Carole, 31060 TOULOUSE (FR)
(74) Mandataire: Fantin, Laurent

(57) **Abrégé**

L'invention a pour objet un procédé d'assemblage d'un caisson central de voilure, ledit procédé comportant :
- une étape d'assemblage des panneaux supérieur et inférieur (42, 44) ainsi que des longerons avant et arrière (46, 48) afin d'obtenir une structure principale (56),
- une étape de fixation d'équipements (58) sur au moins un support d'assemblage (60) positionné en dehors de la structure principale (56),
- une étape d'insertion dudit au moins un support de montage (60) à l'intérieur de la structure principale (56), et
- une étape de solidarisation dudit au moins un support d'assemblage (60) à la structure principale (56).

Ce procédé procure aux opérateurs une meilleure ergonomie lors de l'étape de fixation des équipements et permet de réduire le remps d'intervention sur le caisson central de voilure. L'invention a également pour objet un caisson central de voilure obtenu à partir de ce procédé ainsi qu'un aéronef comportant ledit caisson central de voilure.

## Description

La présente demande se rapporte à un procédé d'assemblage d'un caisson central de voilure d'aéronef comportant une étape de fixation des équipements sur au moins un support d'assemblage situé hors du caisson central de voilure, à un caisson central de voilure obtenu à partir dudit procédé ainsi qu'à un aéronef comportant ledit caisson central de voilure.

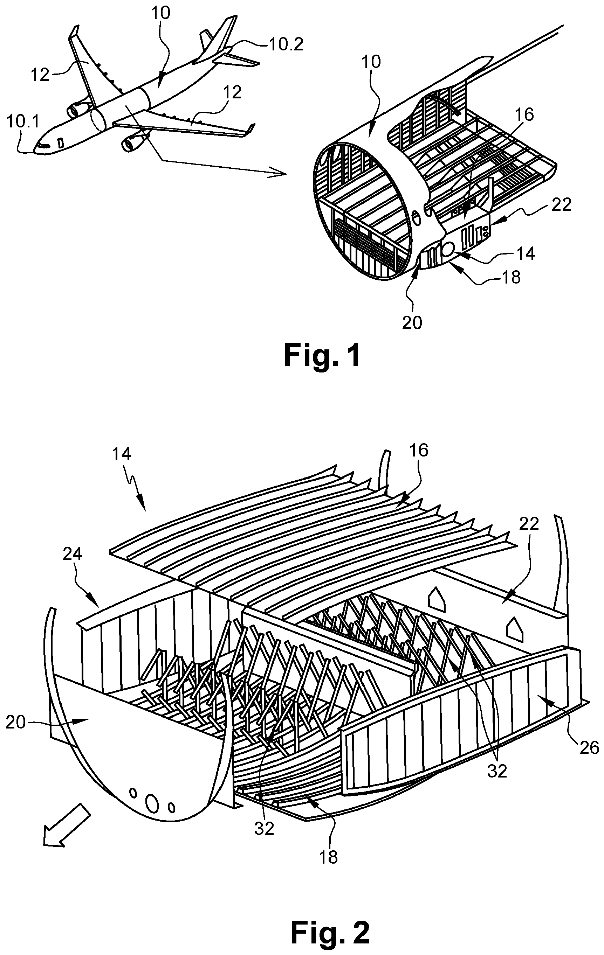

Selon un mode de réalisation visible sur la figure 1, un aéronef comprend un fuselage 10 qui s'étend entre une pointe avant 10.1 et une pointe arrière 10.2, des ailes 12 ainsi qu'un caisson central de voilure 14 reliant les ailes 12 et le fuselage 10.

Pour la présente demande, une direction longitudinale est une direction parallèle à un axe longitudinal, qui est horizontal lorsque l'aéronef est au sol, et s'étend entre les pointes avant et arrière 10.1, 10.2. Une direction transversale est une direction horizontale lorsque l'aéronef est au sol et perpendiculaire à la direction longitudinale. Un plan longitudinal est un plan vertical lorsque l'aéronef est au sol et parallèle à l'axe longitudinal. Un plan transversal est un plan perpendiculaire à l'axe longitudinal.

Comme illustré sur les figures 2 à 4, le caisson central de voilure 14 comprend des panneaux supérieur et inférieur 16, 18 décalés selon la direction verticale, des longerons avant et arrière 20, 22 positionnés dans des plans transversaux décalés selon la direction longitudinale ainsi que des nervures d'extrémités droite et gauche 24, 26 positionnées dans des plans longitudinaux décalés selon la direction transversale.

Le caisson central de voilure 14 comprend également des éléments de renfort, comme des raidisseurs 28 situés au moins sur les faces internes des panneaux supérieur et inférieur 16, 18, des nervures intermédiaires 30 en forme de cadre, positionnées dans des plans longitudinaux, ainsi que des bielles 32 reliant les panneaux supérieur et inférieur 16, 18, inclinées et positionnées dans des plans longitudinaux.

Le caisson central de voilure 14 comprend également de nombreux équipements 34 positionnés à l'intérieur du caisson central de voilure 14 et reliés à au moins un élément parmi les panneaux supérieur et inférieur 16, 18 ainsi que les longerons avant et arrière 20, 22. A titre d'exemple, ces équipements 34 peuvent être des équipements mécaniques, électriques, fluidiques ou autres.

Selon un mode opératoire, un procédé d'assemblage comprend une étape d'assemblage des panneaux supérieur et inférieur 16, 18 pourvus des raidisseurs 28, des longerons avant et arrière 20, 22, des nervures intermédiaires 30, des bielles 32 ainsi que des nervures d'extrémité droite et gauche 24, 26 de manière à obtenir une structure en caisson. En suivant, le procédé d'assemblage comprend des opérations de mise en place et de fixation des équipements 34, un à un, à l'intérieur du caisson central de voilure 14.

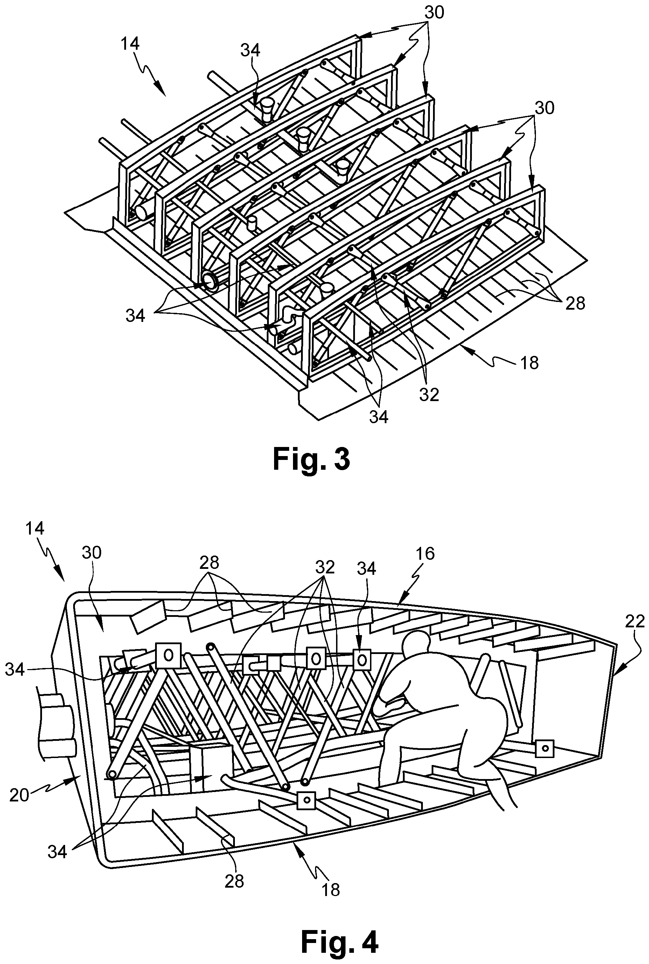

Pour réaliser les opérations de mise en place et de fixation des équipements 34, au moins un opérateur pénètre dans le caisson central de voilure fermé via au moins une ouverture prévue au niveau d'au moins une des nervures d'extrémité droite et gauche 24 et 26. Les équipements 34 sont introduits via cette (ou ces) ouverture(s), puis positionnés et fixés par l'opérateur présent dans le caisson central de voilure en se faufilant entre les bielles 32, comme illustré sur la figure 4. Par conséquente, ces opérations de mise en place et de fixation ne sont pas faciles à réaliser.

Ces opérations de mise en place et de fixation des équipements 34 ne peuvent être réalisées que lorsque le caisson central de voilure 14 est relié au reste du fuselage 10.

Les équipements 34 étant installés les uns à la suite des autres dans le caisson central de voilure 14, ces opérations de mise en place et de fixation sont relativement longues et impactent le temps d'assemblage de l'aéronef.

Selon un autre aspect, il est généralement nécessaire de percer les longerons avant et arrière 20, 22 pour fixer les équipements 34. Ces opérations de perçage génèrent des copeaux et des poussières qui polluent l'aéronef.

La présente invention vise à remédier à tout ou partie des inconvénients de l'art antérieur.

A cet effet, l'invention a pour objet un procédé d'assemblage d'un caisson central de voilure comportant :
- une structure principale qui comprend des panneaux supérieur et inférieur décalés selon une direction verticale ainsi que des longerons avant et arrière positionnés dans des plans transversaux perpendiculaires à une direction longitudinale et décalés selon cette direction longitudinale,
- des équipements positionnés au moins partiellement à l'intérieur du caisson central de voilure et reliés à la structure principale,
- le procédé comprenant une étape d'assemblage, au moins partiellement, de la structure principale.

Selon l'invention, le procédé comprend une étape de fixation des équipements sur au moins un support d'assemblage positionné en dehors de la structure principale, une étape d'insertion dudit au moins un support d'assemblage à l'intérieur de la structure principale et une étape de solidarisation dudit au moins un support d'assemblage à la structure principale. Ce procédé d'assemblage permet de réduire le temps d'intervention sur le caisson central de voilure lors de la mise en place des équipements.

Le fait de fixer les équipements sur au moins un support d'assemblage en dehors du caisson central de voilure offre aux opérateurs une meilleure ergonomie. Enfin, les perçages nécessaires pour fixer les équipements étant réalisés en dehors du caisson central de voilure et de l'aéronef, les éventuels débris ou copeaux générés ne polluent pas l'intérieur du caisson central de voilure et de l'aéronef.

Selon une autre caractéristique, les équipements sont fixés sur plusieurs supports d'assemblage maintenus au moins temporairement immobiles les uns par rapport aux autres de manière à former un module.

Selon une autre caractéristique, le module est introduit et fixé, d'un seul bloc, dans le caisson central de voilure.

Selon une autre caractéristique, les supports d'assemblage sont temporairement reliés à un gabarit lors des étapes d'insertion et de solidarisation des supports d'assemblage, le gabarit étant retiré de la structure principale après l'étape de solidarisation des supports d'assemblage.

L'invention a également pour objet un caisson central de voilure obtenu à partir du procédé selon l'une des caractéristiques précédentes. Le caisson central de voilure comporte d'une part une structure principale qui comprend des panneaux supérieur et inférieur décalés selon une direction verticale ainsi que des longerons avant et arrière positionnés dans des plans transversaux perpendiculaires à une direction longitudinale et décalés selon cette direction longitudinale ainsi que, d'autre part, des équipements positionnés au moins partiellement à l'intérieur du caisson central de voilure et reliés à la structure principale.

Selon l'invention, le caisson central de voilure comprend au moins un support d'assemblage sur lequel sont fixés les équipements ainsi qu'au moins une liaison reliant le support d'assemblage et la structure principale.

Selon une autre caractéristique, chaque support d'assemblage comprend au moins une plaque, sur laquelle sont fixés les équipements, sensiblement parallèle au longeron avant ou arrière.

Selon une autre caractéristique, chaque support d'assemblage comprend des première et deuxième bielles de liaison reliées à la plaque et espacées entre elles, les première et deuxième bielles de liaison comportant chacune une première extrémité reliée directement ou indirectement au panneau supérieur par une première liaison ainsi qu'une deuxième extrémité reliée directement ou indirectement au panneau inférieur par une deuxième liaison.

Selon une autre caractéristique, les première et deuxième bielles de liaison sont positionnées dans des plans sensiblement longitudinaux.

Selon une autre caractéristique, le caisson central de voilure comprend au moins une première liaison reliant directement ou indirectement chaque support d'assemblage au panneau supérieur ainsi qu'au moins une deuxième liaison reliant directement ou indirectement chaque support d'assemblage au panneau inférieur.

Selon une autre caractéristique, au moins une des première et deuxième liaisons comprend une liaison pivot présentant un axe de pivotement orienté selon une direction transversale perpendiculaire aux directions verticale et longitudinale.

Selon une autre caractéristique, la première ou deuxième liaison comprend :
- une chape solidaire du support d'assemblage et comportant des branches espacées,
- une âme solidaire du panneau supérieur ou inférieur, ou d'un élément relié au panneau supérieur ou inférieur, positionnée dans un plan longitudinal entre les branches,
- des orifices traversant les branches et l'âme, lesdits orifices étant alignés,
- un axe de pivotement, reliant la chape et l'âme, logé dans les orifices traversant les branches et l'âme, ledit axe de pivotement étant orienté selon la direction transversale.

Selon une autre caractéristique, le caisson central de voilure comprend plusieurs supports d'assemblage comportant chacun au moins une plaque, les plaques des différents supports d'assemblage étant positionnées dans un même plan transversal.

L'invention a également pour objet un module destiné à être intégré dans un caisson central voilure, comportant plusieurs supports d'assemblage immobiles au moins temporairement les uns par rapport aux autres ainsi que des équipements fixés sur les supports d'assemblage. L'invention a également pour objet un aéronef comportant un caisson central de voilure selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef illustrant également en détail une partie centrale de l'aéronef,
- La figure 2 est une vue en perspective éclatée d'un caisson central de voilure,
- La figure 3 est une vue en perspective d'un caisson central de voilure, sans son panneau supérieur et ses longerons avant et arrière, illustrant un mode de réalisation de l'art antérieur,
- La figure 4 est une vue en perspective d'un caisson central de voilure, lors de la mise en place des équipements, illustrant un mode de réalisation de l'art antérieur,
- La figure 5 est une vue en perspective d'un support d'assemblage illustrant un mode de réalisation de l'invention,
- La figure 6 est une vue en perspective d'un sous-ensemble comprenant des équipements et des supports d'assemblage illustrant un mode de réalisation de l'invention,
- La figure 7 est une vue en perspective d'une partie d'un caisson central de voilure, les équipements n'étant pas représentés, illustrant un mode de réalisation de l'invention,
- La figure 8 est une vue en perspective d'un caisson central de voilure illustrant un mode de réalisation de l'invention, et
- La figure 9 est une coupe transversale d'une liaison reliant un support d'assemblage et un cadre intermédiaire illustrant un mode de réalisation de l'invention.

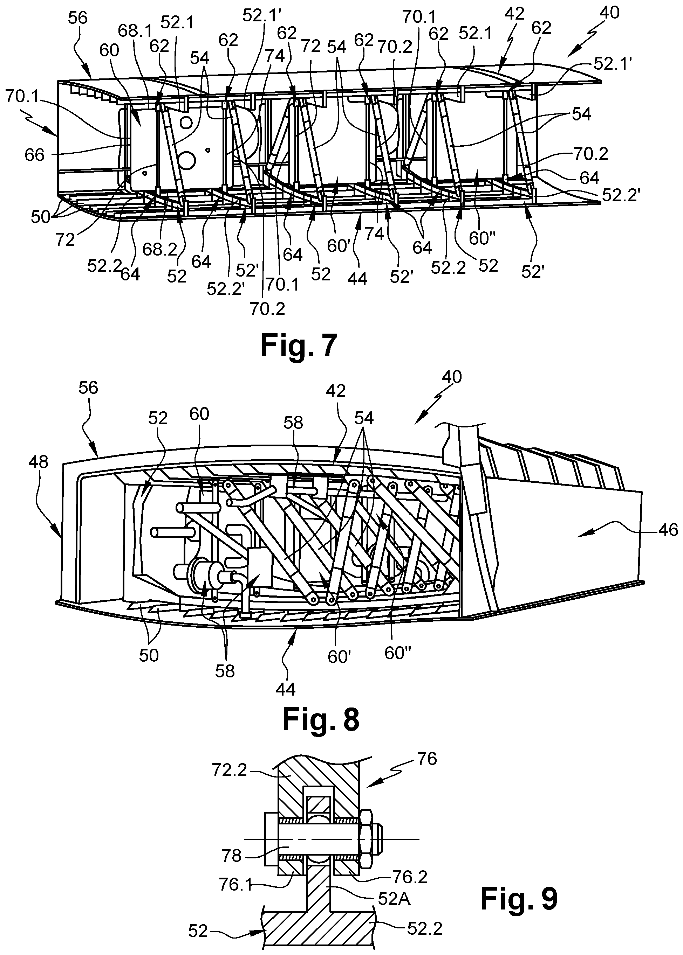

Selon un mode de réalisation visible sur les figures 7 et 8, un caisson central de voilure 40 comprend des panneaux supérieur et inférieur 42, 44 décalés selon la direction verticale, des longerons avant et arrière 46, 48 positionnés dans des plans transversaux décalés selon la direction longitudinale ainsi que des nervures d'extrémités droite et gauche (non représentées) positionnées dans des plans longitudinaux décalés selon la direction transversale.

Le caisson central de voilure 40 comprend également des éléments de renfort, comme des raidisseurs 50 situés au moins sur les faces internes des panneaux supérieur et inférieur 42, 44, des nervures intermédiaires 52 en forme de cadre, positionnées dans des plans longitudinaux, ainsi que des bielles 54 reliant les panneaux supérieur et inférieur 42, 44, inclinées et positionnées dans des plans longitudinaux.

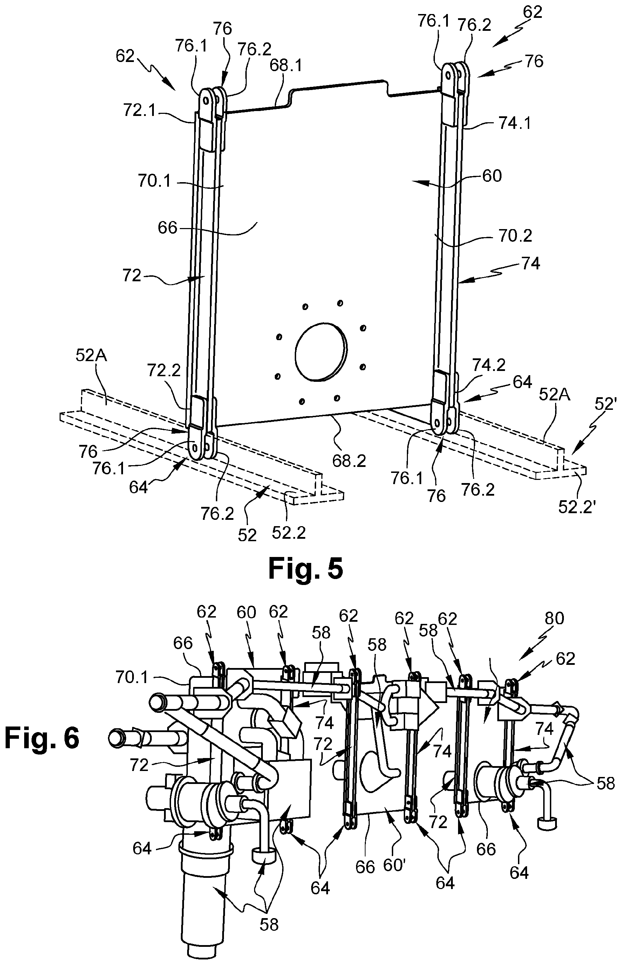

Selon une configuration, le caisson central de voilure 40 comprend plusieurs paires de nervures intermédiaires 52 reliées chacune à au moins un élément parmi les panneaux supérieur et inférieur 42, 44 ainsi que les longerons avant et arrière 46, 48. Selon un mode de réalisation, chaque nervure intermédiaire 52 comprend une âme 52A (visible sur les figures 5 et 9) ainsi qu'une première partie 52.1 solidarisée au panneau supérieur 42 et une deuxième partie 52.2 solidarisée au panneau inférieur (visibles sur les figures 5 et 7).

Bien entendu, l'invention n'est pas limitée au mode de réalisation visible sur les figures 7 et 8 pour le caisson central de voilure 40. A titre d'exemple, ce dernier peut comprendre au moins une cloison transversale. Quel que soit le mode de réalisation, le caisson central de voilure 40 comprend une structure principale 56 constituée des panneaux supérieur et inférieur 42, 44 ainsi que des longerons avant et arrière 46, 48 formant une structure tubulaire qui présente des ouvertures latérales droite et gauche.

Le caisson central de voilure 40 comprend plusieurs équipements 58 positionnés au moins partiellement à l'intérieur du caisson central de voilure 40 et reliés à la structure principale 56. A titre d'exemple, ces équipements 58 peuvent être des équipements mécaniques, électriques, fluidiques ou autres.

Selon une caractéristique, le caisson central de voilure 40 comprend au moins un support d'assemblage 60 sur lequel sont fixés les équipements 58 ainsi qu'au moins une liaison 62, 64 reliant le support d'assemblage 60 et la structure principale 56.

Selon un mode opératoire, un procédé d'assemblage d'un caisson central de voilure 40 comprend une première étape d'assemblage, au moins partiellement, de la structure principale 56, une étape de fixation des équipements 58 sur au moins un support d'assemblage 60 positionné en dehors de la structure principale 56, une étape d'insertion dudit au moins un support de montage 60 à l'intérieur de la structure principale 56, après l'étape de fixation des équipements 58, et une étape de solidarisation dudit au moins un support d'assemblage 60 à la structure principale 56.

Selon une configuration, les équipements 58 sont fixés sur le (ou les) support(s) d'assemblage 60 en temps masqué, lors de la réalisation d'autres étapes d'assemblage du caisson central de voilure 40 ou de l'aéronef, puis le sous-ensemble formé par les équipements 58 et le (ou les) support(s) d'assemblage 60 est monté en une seule opération dans la structure principale 56 en l'introduisant via l'une des extrémités latérales droite ou gauche de la structure principale 56, ce qui permet de réduire le temps d'intervention sur le caisson central de voilure 40 et de limiter l'impact de l'installation des équipements 58 sur le temps d'assemblage de l'aéronef. Le fait de fixer les équipements 58 sur le (ou les) support(s) d'assemblage 60 en dehors du caisson central de voilure 40 offre aux opérateurs une meilleure ergonomie, ces derniers pouvant circuler aisément tout autour du (ou des) support(s) d'assemblage 60.

Enfin, lors des perçages nécessaires pour la fixation des équipements 58, les éventuels débris ou copeaux sont générés hors de l'aéronef et ne polluent pas l'intérieur de l'aéronef.

Selon un mode de réalisation, chaque support d'assemblage 60 comprend au moins une plaque 66 sur laquelle sont fixés les équipements 58. Chaque plaque 66 présente un bord supérieur 68.1 proche du panneau supérieur 42, sensiblement parallèle à ce dernier, un bord inférieur 68.2 proche du panneau inférieur 44, sensiblement parallèle de ce dernier, ainsi que des premier et deuxième bords latéraux 70.1, 70.2 sensiblement verticaux reliant les bords supérieur et inférieur 68.1, 68.2.

Selon une configuration, le caisson central de voilure 40 comprend au moins une première liaison 62 reliant directement ou indirectement chaque support d'assemblage 60 au panneau supérieur 42 ainsi qu'au moins une deuxième liaison 64 reliant directement ou indirectement chaque support d'assemblage 60 au panneau inférieur 44. Ainsi, chaque support d'assemblage 60 peut assurer la fonction de renforts de la structure principale 56, en substitution ou en complément des bielles 54.

Selon un agencement, la plaque 66 de chaque support d'assemblage 60 est positionnée dans un plan transversal sensiblement parallèle au longeron avant ou arrière 46, 48. Selon une configuration, la plaque 66 de chaque support d'assemblage 60 est plus proche du longeron arrière 48 que du longeron avant 46.

Selon un mode de réalisation visible sur la figure 5, chaque support d'assemblage 60 comprend des première et deuxième bielles de liaison 72, 74 reliées à la plaque 66 et espacées entre elles, la première bielle de liaison 72 étant positionnée au niveau ou proche du premier bord latéral 70.1 de la plaque 66, la deuxième bielle de liaison 74 étant positionnée au niveau ou proche du deuxième bord latéral 70.2 de la plaque 66, les première et deuxième bielles de liaison 72, 74 comportant chacune une première extrémité 72.1, 74.1, en saillie par rapport au bord supérieur 68.1 de la plaque 66, directement ou indirectement reliée au panneau supérieur42 par une première liaison 62 ainsi qu'une deuxième extrémité 72.2, 74.2, en saillie par rapport au bord inférieur 68.2 de la plaque 66, directement ou indirectement reliée au panneau inférieur 44 par une deuxième liaison 64.

Selon le mode de réalisation visible sur la figure 5, les première et deuxième bielles de liaison 72, 74 sont positionnées dans des plans sensiblement longitudinaux. Elles sont sensiblement verticales. Selon une configuration, chaque première ou deuxième bielle de liaison 72, 74 est positionnée dans le plan d'une nervure intermédiaire 52.

Selon un mode de réalisation, les plaques 66 sont métalliques, en matériau composite ou hybrides (métalliques et en matériau composite). Les première et deuxième bielles de liaison 72, 74 sont généralement métalliques. Elles présentent une section dans un plan horizontal en T. Pour chaque support d'assemblage 60, la plaque 66 est reliée à chacune des première et deuxième bielles de liaison 72, 74 par soudage ou grâce à des éléments de liaison comme des rivets ou des boulons par exemple. Bien entendu, l'invention n'est pas limitée à ces matériaux pour la plaque 66 et les bielles de liaison 72, 74, à cette section pour les bielles de liaison 72, 74 ou à ce type de liaison pour relier la plaque 66 et les bielles de liaison 72, 74.

Selon une configuration, le caisson central de voilure 40 comprend plusieurs supports d'assemblage 60, 60', 60" comportant chacun au moins une plaque 66, les plaques 66 des différents supports d'assemblage 60, 60', 60" étant positionnées dans un même plan transversal.

En présence de plusieurs supports d'assemblage 60, 60', 60", un même équipement 58 peut être relié à plusieurs supports d'assemblage 60, 60', 60". Les différents supports d'assemblage 60, 60', 60" sont immobilisés les uns par rapport aux autres lors de la fixation des équipements 58 et lors de la mise en place et la solidarisation des supports d'assemblage 60, 60', 60" dans le caisson central de voilure 40. A cet effet, les différents supports d'assemblage 60, 60', 60" sont immobilisés les uns par rapport aux autres en étant reliés temporairement à un même gabarit au moins lors de l'étape de fixation des équipements 58 sur les supports d'assemblage 60, 60', 60". Selon un mode opératoire, les supports d'assemblage 60, 60', 60" sont temporairement reliés au gabarit lors des étapes d'insertion et de solidarisation des supports d'assemblage 60, 60', 60", le gabarit étant retiré de la structure principale 56 après l'étape de solidarisation des supports d'assemblage 60, 60', 60".

Selon un autre mode opératoire, les supports d'assemblage 60, 60', 60" sont maintenus immobiles les uns par rapport aux autres grâce à un outil utilisé pour les positionner en même temps et selon une même cinématique dans le caisson central de voilure 40.

Quel que soit le mode de réalisation, les supports d'assemblage 60, 60', 60" sur lesquels sont assemblés les équipements 58 en dehors de la structure principale 56 sont maintenus au moins temporairement immobiles les uns par rapport aux autres de manière à former un module 80, et ce au moins lors de l'étape de fixation des équipements 58 sur les supports d'assemblage 60, 60, 60''. Selon un mode opératoire, ce module 80 est introduit et fixé, d'un seul bloc, dans le caisson central de voilure 40.

Le fait de prévoir plusieurs supports d'assemblage 60, 60', 60" comportant des plaques 66 positionnées dans le même plan transversal permet au caisson central de voilure 40 de pouvoir éventuellement fléchir dans un plan transversal, autour d'un axe parallèle à la direction longitudinale.

Pour chaque support d'assemblage 60, 60', 60", les première et deuxième extrémités 72.1, 72.2 de la première bielle de liaison 72 sont reliées à une première nervure intermédiaire 52, la première extrémité 72.1 étant reliée à la première partie 52.1 de la première nervure intermédiaire 52 solidaire du panneau supérieur 42, la deuxième extrémité 72.2 étant reliée à la deuxième partie 52.2 de la première nervure intermédiaire 52 solidaire du panneau inférieur 44. Les première et deuxième extrémités 74.1, 74.2 de la deuxième bielle de liaison 74 sont reliées à une deuxième nervure intermédiaire 52', la première extrémité 74.1 étant reliée à la première partie 52.1' de la deuxième nervure intermédiaire 52' solidaire du panneau supérieur 42, la deuxième extrémité 74.2 étant reliée à la deuxième partie 52.2' de la deuxième nervure intermédiaire 52' solidaire du panneau inférieur 44.

Selon un mode de réalisation, au moins une des première et deuxième liaisons 62, 64 comprend une liaison pivot présentant un axe de pivotement orienté transversalement. Selon une configuration, la liaison pivot est rotulée.

Selon un agencement visible sur la figure 9, au moins une des première et deuxième liaisons 62, 64 comprend une chape 76 solidaire du support d'assemblage 60, plus particulièrement de la première ou deuxième extrémité 72.1, 72.2, 74.1, 74.2 de la première ou deuxième bielle de liaison 72, 74, ladite chape 76 comportant des branches 76.1, 76.2 espacées, une âme 52A solidaire du panneau supérieur ou inférieur 42, 44 ou d'un élément, comme une nervure intermédiaire 52, relié au panneau supérieur ou inférieur 42, 44, positionnée dans un plan longitudinal entre les branches 76.1, 76.2, des orifices traversant les branches 76.1, 76.2 et l'âme 52A alignés ainsi qu'un axe de pivotement 78 logé dans les orifices traversant les branches 76.1, 76.2 et l'âme 52A et orienté selon la direction transversale.

Selon ce mode de réalisation, les nervures intermédiaires 52 sont pré-percées avant d'être solidarisées aux panneaux supérieur et inférieur 42, 44 ainsi qu'aux longerons avant arrière 46, 48. Ainsi, l'étape de solidarisation des supports d'assemblage 60, 60', 60" dans le caisson central de voilure 40 ne nécessite aucun perçage mais uniquement la mise en place des axes de pivotement 78, ce qui permet de réduire le temps nécessaire pour cette étape de solidarisation.

Selon un agencement, un jeu est prévu entre les branches 76.1, 76.2 de chaque chape 76 et l'âme 52A de la nervure intermédiaire 52. Ce jeu autorise un degré de tolérance selon la direction transversale pour le positionnement des chapes 76 de chaque support d'assemblage 60, 60', 60" par rapport aux âmes 52A des nervures intermédiaires 52.

Pour obtenir un degré de tolérance selon les directions verticale et/ou longitudinale, chacune des première et deuxième liaisons 62, 64 comprend un double excentrique intercalé entre l'axe de pivotement 78 et l'orifice traversant de l'âme 52A de la nervure intermédiaire 52. En variante, pour chaque bielle de chaque support d'assemblage 60, 60', 60", les orifices traversants des branches 76.1, 76.2 de la chape de la première ou deuxième liaison 62, 64 sont percés après avoir mesuré l'entraxe entre l'orifice traversant de l'âme de la première partie 52.1 de la nervure intermédiaire 52 reliée au panneau supérieur 42 et l'orifice traversant de l'âme de la deuxième partie 52.2 de la nervure intermédiaire 52 reliée au panneau inférieur 44.

Bien entendu, l'invention n'est pas limitée à ce mode de réalisation pour les première et deuxième liaisons 62, 64.

## Revendications

1. Procédé d'assemblage d'un caisson central de voilure comportant :
- une structure principale (56) qui comprend des panneaux supérieur et inférieur (42, 44) décalés selon une direction verticale ainsi que des longerons avant et arrière (46, 48) positionnés dans des plans transversaux perpendiculaires à une direction longitudinale et décalés selon cette direction longitudinale,
- des équipements (48) positionnés au moins partiellement à l'intérieur du caisson central de voilure (40) et reliés à la structure principale (56),
- le procédé comprenant une étape d'assemblage, au moins partiellement, de la structure principale (56),
- **caractérisé en ce que** le procédé comprend une étape de fixation des équipements (58) sur au moins un support d'assemblage (60) positionné en dehors de la structure principale (56), une étape d'insertion dudit au moins un support d'assemblage (60) à l'intérieur de la structure principale (56) et une étape de solidarisation dudit au moins un support d'assemblage (60) à la structure principale (56).

2. Procédé selon la revendication précédente, **caractérisé en ce que** les équipements (58) sont fixés sur plusieurs supports d'assemblage (60, 60, 60") maintenus au moins temporairement immobiles les uns par rapport aux autres de manière à former un module (80).

3. Procédé selon la revendication précédente, **caractérisé en ce que** le module (80) est introduit et fixé, d'un seul bloc, dans le caisson central de voilure (40).

4. Procédé selon la revendication précédente, **caractérisé en ce que** les supports d'assemblage (60, 60', 60") sont reliés temporairement à un gabarit lors des étapes d'insertion et de solidarisation des supports d'assemblage (60, 60', 60"), le gabarit étant retiré de la structure principale (56) après l'étape de solidarisation des supports d'assemblage (60, 60', 60").

5. Caisson central de voilure obtenu à partir du procédé selon l'une des revendications précédentes, le caisson central de voilure comportant d'une part une structure principale (56) qui comprend des panneaux supérieur et inférieur (42, 44) décalés selon une direction verticale ainsi que des longerons avant et arrière (46, 48) positionnés dans des plans transversaux perpendiculaires à une direction longitudinale et décalés selon cette direction longitudinale ainsi que, d'autre part, des équipements (58) positionnés au moins partiellement à l'intérieur du caisson central de voilure (40) et reliés à la structure principale (56) ; **caractérisé en ce que** le caisson central de voilure (40) comprend au moins un support d'assemblage (60) sur lequel sont fixés les équipements (58) ainsi qu'au moins une liaison (62, 64) reliant le support d'assemblage (60) et la structure principale (56).

6. Caisson central de voilure selon la revendication précédente, **caractérisé en ce que** chaque support d'assemblage (60) comprend au moins une plaque (66), sur laquelle sont fixés les équipements (58), sensiblement parallèle au longeron avant ou arrière (46, 48).

7. Caisson central de voilure selon la revendication précédente, **caractérisé en ce que** chaque support d'assemblage (60) comprend des première et deuxième bielles de liaison (72, 74) reliées à la plaque (66) et espacées entre elles, les première et deuxième bielles de liaison (72, 74) comportant chacune une première extrémité (72.1, 74.1) directement ou indirectement reliée au panneau supérieur (42) par une première liaison (62) ainsi qu'une deuxième extrémité (72.2, 74.2) directement ou indirectement reliée au panneau inférieur (44) par une deuxième liaison (64).

8. Caisson central de voilure selon la revendication précédente, **caractérisé en ce que** les première et deuxième bielles de liaison (72, 74) sont positionnées dans des plans sensiblement longitudinaux.

9. Caisson central de voilure selon l'une des revendications 5 à 8, **caractérisé en ce que** le caisson central de voilure (40) comprend au moins une première liaison (62) reliant directement ou indirectement chaque support d'assemblage (60) au panneau supérieur (42) ainsi qu'au moins une deuxième liaison (64) reliant directement ou indirectement chaque support d'assemblage (60) au panneau inférieur (44).

10. Caisson central de voilure selon la revendication précédente, **caractérisé en ce qu'**au moins une des première et deuxième liaisons (62, 64) comprend une liaison pivot présentant un axe de pivotement orienté selon une direction transversale perpendiculaire aux directions verticale et longitudinale.

11. Caisson central de voilure selon la revendication précédente, **caractérisé en ce que** la première ou deuxième liaison (62, 64) comprend :
- une chape (76) solidaire du support d'assemblage (60) et comportant des branches (76.1, 76.2) espacées,
- une âme (52A) solidaire du panneau supérieur ou inférieur (42, 44), ou d'un élément relié au panneau supérieur ou inférieur (42, 44), positionnée dans un plan longitudinal entre les branches (76.1, 76.2),
- des orifices traversant les branches (76.1, 76.2) et l'âme (52A), lesdits orifices étant alignés,
- un axe de pivotement (78), reliant la chape (76) et l'âme (52A), logé dans les orifices traversant les branches (76.1, 76.2) et l'âme (52A), ledit axe de pivotement (78) étant orienté selon la direction transversale.

12. Caisson central de voilure selon l'une des revendications 5 à 11, **caractérisé en ce que** le caisson central de voilure (40) comprend plusieurs supports d'assemblage (60, 60', 60") comportant chacun au moins une plaque (66), les plaques (66) des différents supports d'assemblage (60, 60', 60") étant positionnées dans un même plan transversal.

13. Module destiné à être intégré dans un caisson central voilure selon la revendication 12, **caractérisé en ce que** le module (80) comprend plusieurs supports d'assemblage (60, 60', 60") immobiles au moins temporairement les uns par rapport aux autres ainsi que des équipements (58) fixés sur les supports d'assemblage (60, 60', 60").

14. Aéronef comportant un caisson central de voilure selon l'une des revendications 5 à 12.
